(19) Europäisches Patentamt
European Patent Office
Office européen des brevets

(11) EP 4 282 816 A1

(12) EUROPEAN PATENT APPLICATION

(43) Date of publication:
**29.11.2023 Bulletin 2023/48**

(21) Application number: **22175291.8**

(22) Date of filing: **25.05.2022**

(51) International Patent Classification (IPC):
***C01B 3/22*** *(2006.01)* ***B01J 23/00*** *(2006.01)*

(52) Cooperative Patent Classification (CPC):
**C01B 3/22; B01J 31/0284; B01J 31/1805; B01J 31/1815; B01J 31/189; B01J 31/2295;**
B01J 2531/821; C01B 2203/0277; C01B 2203/066; C01B 2203/1047

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Umicore AG & Co. KG**
**63457 Hanau-Wolfgang (DE)**

(72) Inventors:
- **Bayer, Martin Nielsen**
  **2800 Kgs Lyngby (DK)**
- **Piccirilli, Luca**
  **1364 Copenhagen (DK)**
- **Riisager, Anders**
  **2630 Taastrup (DK)**
- **Padilla Paz, Rosa Maria**
  **2920 Charlottenlund (DK)**

# (54) CATALYTIC SYSTEM FOR STORING AND RELEASING OF HYDROGEN FROM LIQUID ORGANIC HYDROGEN CARRIERS

(57) The present invention is directed to a catalytic system which can be used to hydrogenate and dehydrogenate a liquid organic hydrogen carrier (LOHC) compound. The catalytic system is composed of a special type of catalyst, a special type of solvent, and an LOHC compound. It can be used to store and release hydrogen upon demand, e.g. for usage in fuel cells of electrically propelled vehicles. Likewise, an apparatus comprising the inventive catalytic system and its use is contemplated.

EP 4 282 816 A1

## Description

The present invention is directed to a catalytic system which can be used to hydrogenate and dehydrogenate a liquid organic hydrogen carrier (LOHC) compound. The catalytic system is composed of a special type of catalyst, a special type of solvent, and an LOHC compound. It can be used to store and release hydrogen upon demand, e.g. for usage in fuel cells of electrically propelled vehicles. Likewise, an apparatus comprising the inventive catalytic system and its use is contemplated.

Within the concept of the "Green Deal"-campaign of the EU decarbonization of mobility is one major pillar. Several aspects in this connection have already been addressed and intensively discussed in the art (https://europa.eu/news-room/content/presentation-efficient-and-green-mobility-package_en). When talking about carbonless propulsion of vehicles hydrogen fuel is often mentioned as a promising energy carrier, in particular if the hydrogen is produced by sustainable sources, like wind or solar energy production.

Hydrogen is found in the first group and the first period in the periodic table, i.e. it is the lightest element. Hydrogen is rarely found in its pure form in the atmosphere. In a flame of pure hydrogen burning in air, the hydrogen ($H_2$) reacts with oxygen ($O_2$) to form water ($H_2O$) with the release of energy.

$$2H2(g) + O_2(g) \rightarrow 2H_2O\ (g) + energy$$

In atmospheric air rather than pure oxygen, hydrogen combustion may yield small amounts of nitrogen oxides with the water vapor.

On a weight basis, the heat of combustion of hydrogen gas is about three times that of hydrocarbon-based fuels, making it an efficient and attractive energy carrier. However, as a consequence of the very low density of hydrogen gas, the volume based energy density is low, compared to hydrocarbon fuels.

Hydrogen fuel is a zero-carbon fuel when burned with oxygen. It can be used in fuel cells or internal combustion engines (e.g. HICEV). Regarding hydrogen propelled vehicles, hydrogen has begun to be used in commercial fuel cell vehicles such as passenger cars, and has been used in fuel cell buses for many years.

Fuel cells, in particular proton-exchange membrane fuel cells (PEMFC), also known as polymer electrolyte membrane (PEM) fuel cells, are developed mainly for transport applications. Their distinguishing features include lower temperature/pressure ranges (50°C to 100°C) and a special proton-conducting polymer electrolyte membrane (https://en.wikipedia.org/w/index.php?title=Proton-exchange membrane fuel cell&oldid=1064212583). A proton-exchange membrane fuel cell transforms the chemical energy liberated during the electrochemical reaction of hydrogen and oxygen to electrical energy, as opposed to the direct combustion of hydrogen and oxygen gases to produce thermal energy. A stream of hydrogen is delivered to the anode side of the membrane electrode assembly (MEA). At the anode side it is catalytically split into protons and electrons. This oxidation half-cell reaction or hydrogen oxidation reaction (HOR) is represented by:

$$H_2 \rightarrow 2H^+ + 2e^-$$

The newly formed protons permeate through the polymer electrolyte membrane (PEM) to the cathode side. The electrons travel along an external load circuit to the cathode side of the MEA, thus creating the current output of the fuel cell. Meanwhile, a stream of oxygen is delivered to the cathode side of the MEA. At the cathode side oxygen molecules react with the protons permeating through the polymer electrolyte membrane and the electrons arriving through the external circuit to form water molecules. This reduction half-cell reaction or oxygen reduction reaction (ORR) is represented by:

$$\frac{1}{2}O_2 + 2H^+ + 2e^- \rightarrow H_2O$$

In order to provide hydrogen to a fuel cell, e.g. in a mobile application, the storage of hydrogen for the intended use is one of the major technical challenges ahead. Methods of storing hydrogen encompass mechanical approaches such as high pressures and low temperatures, or chemical compounds that release $H_2$ upon demand. Interest in using hydrogen for on-board storage of energy in zero-emissions vehicles is motivating the development of new methods of storage, more adapted to this new application. The over-arching challenge is the very low boiling point of hydrogen: it boils around -253°C. Achieving such low temperatures requires significant energy.

To date several methods exist which allow storing hydrogen. Compressed or liquefied hydrogen is a storage form whereby hydrogen gas is kept under pressure to increase the storage density. Compressed hydrogen in hydrogen tanks at 350 bar (5,000 psi) and 700 bar (10,000 psi) is used for hydrogen tank systems in vehicles. Another form of storing hydrogen is to chemically bind it to a carrier. Metal hydrides, ammonia and liquid organic carriers as well as others are vitally discussed as promising solutions, in particular for mobile hydrogen storage applications.

Liquid organic compounds that can be used to store hydrogen are called Liquid Organic Hydrogen Carriers

(LOHCs). These are unsaturated organic compounds that can store useful amounts of hydrogen. These LOHCs are hydrogenated for storage and dehydrogenated again when the energy/hydrogen is needed, e.g. for a fuel cell. Using LOHCs, relatively high gravimetric storage densities can be reached (about 6 wt-% $H_2$ per LOHC), and the overall energy efficiency is higher than for other chemical storage options. Both hydrogenation and dehydrogenation of LOHCs require a catalyst.

Several patents and patent application already teach the use of LOHC in connection with fuel cell applications (WO2020120261A1, WO2020064222A1, WO2018228895A1, DE102017201451A1, US2016061383AA, DE102012004444A1). LOHC is taken to mean a group of chemical materials, such as are described in Energy Environ. Sci., 2011, 4, 2767 or US20100081034AA or Huang, et al., J. Am. Chem. Soc, 2009, 131 (39), pp 13898-13899, and Fang, et al. J Am. Chem. Soc, 2009, 131 (42), pp 15330-15338 as well as https://en.wikipedia.orq/w/index.php?title=Liquid organic hydrogen carriers&oldid=1071399187 or https://en.wikipe-dia.org/w/index.php'?title=Hydrogen storage&oldid=1080342247.

The functioning of an LOHC is described as follows. The low-energy form of the LOHC is reversibly converted by means of hydrogenation by hydrogen into the energy-rich form, which, in a reverse reaction, recovers hydrogen from the hydrogenated product with the formation of the low-energy form merely by a temperature increase and/or reduction of the hydrogen pressure. The reaction is therefore reversible. Reversible means, that the materials undergo cyclic transformation from a low-energy dehydrogenated state to an energy-rich hydrogenated state and back to the dehydrogenation state, without a significant loss of the LOHC material. In an optimal case, these cycles can be repeated indefinitely even on a continuous basis. In practice, both the hydrogenation and dehydrogenation reaction require a catalyst. The hydrogenation and dehydrogenation reactions can be done in different locations, and in this way the LOHC materials provide a method to transport energy in the form of hydrogen, without any loss or consumption of the LOHC materials. Particularly, advantageously usable LOHCs allow this reversible conversion under technically relevant conditions, pressure and temperature being mentioned by way of example.

Several LOHC systems are known. LOHC systems are often based on cyclic hydrocarbon molecules (Heublein, N. et al. International Journal of Hydrogen Energy 2020, 45 (46), 24902-24916 https://doi.org/10.1016/j.ijhydene.2020.04.274; Kwak et al., Energy Conversion and Management, 2021, 239, 114124 https://doi.org/10.1016/j.en-conman.2021.114124). A first reference is made to polycyclic aromatic hydrocarbons that are used today as industrial heat transfer liquids like Diben-zyltoluene, Benzyltoluene, e.g. known under the trademark Marlotherm® or their isomeric mixtures (scheme 1).

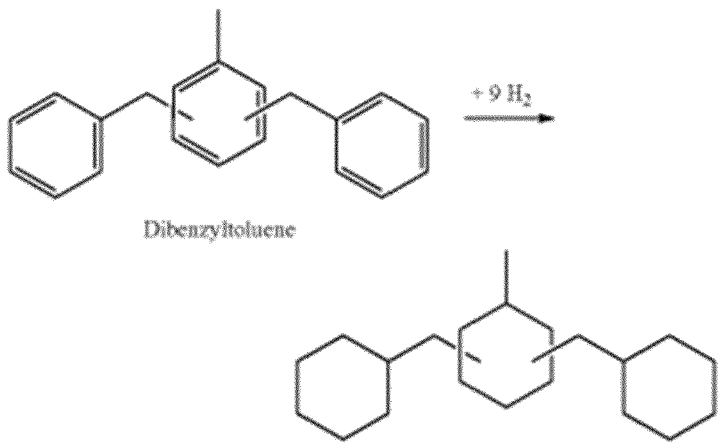


Dibenzyltoluene

H-18-Dibenzyltoluene

*Scheme 1: Special LOHCs*

The method and the arrangement are aimed at the danger-free and technically simple supply to various kinds of vehicles, like for example motor vehicles, buses, lorries, forklifts, ships, etc., collectively called "vehicle", with pure hydrogen. There is therefore the advantage of not reequipping filling stations for operation at very low temperatures or very high pressures with high expenditure (like in cases of liquid hydrogen), but continuing to use the existing infrastructure and storing hydrogen in the form of LOHC, which is much less flammable and much easier to handle, as compared to compressed $H_2$.

It was demonstrated that replacing hydrocarbons by heteroatoms, like N, O etc. improves reversible de/hydrogenation properties (Xie, Y., Milstein, D. ACS Appl. Energy Mater. 2019, 2 (6), 4302-4308 https://doi.org/10.1021/acsaem.9b00523; Jorschick, H. et al. Sustainable Energy Fuels 2021, 5 (5), 1311-1346 https://doi.org/10.1039/D0SE01369B). Reference is to be made here to the hydrogenation/dehydrogenation of N-ethylcarbazole (NEC). In this case, N-ethylcarbazole (NEC) as the low-energy form is converted to the perhydro form (H12-NEC) as the energy-rich form according to the following reaction plan (scheme 2).

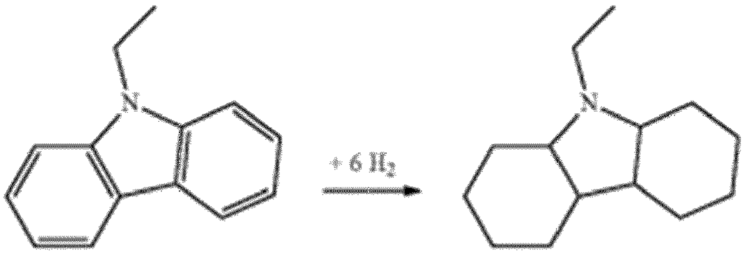


N-Ethylcarbazole H12-N-Ethylcarbazole

*Scheme 2: Special N-heterocyclic LOHCs*

H12-NEC is a liquid that can be stored at ambient temperature and ambient pressure. The storage density for hydrogen according to this reaction is approximately twice as high in terms of volume as in a 700 bar tank filled with hydrogen. The tank can adopt any form, in contrast to a pressure container, which makes it easier to accommodate in a technical application.

As already explained, the hydrogenation and dehydrogenation processes in the LOHC cycle require suitable catalysts. These catalysts can be heterogeneous catalysts or homogeneous catalysts. The best known catalysts to date are heterogeneous catalysts, containing metal particles on an oxidic support. The metals are typically chosen from the group, but not limited to Ni, Co, Pd, Pt, Rh, Ru, Pd, Ir, Re. Examples for oxidic supports are alumina, titania, silica, ceria etc. These catalysts can, in principle, be used for both the hydrogenation and dehydrogenation part of the LOHC cycle, albeit that Ni is primarily used for the hydrogenation. Using combinations of metals, alloys, and a combination of catalyst supports can also result in suitable catalysts.

With such catalysts, the reaction temperature will be in the range of 150 - 300°C at 20 - 50 bar for hydrogenation, and <3 bar for dehydrogenation. The high reaction temperature requires some heating of the reactor, which is a limitation in the applicability of carbon-containing molecules as hydrogen storage and is incompatible with the operative temperature of e.g. traditional PEM fuel cells.

The dehydrogenation of LOHCs is an endothermic process which runs at feasible rates only at elevated temperatures. In any case, the endothermic character of the dehydrogenation has a negative effect on the overall efficiency of an LOHC system. Hence, the heat management in an LOHC system is crucial in order to heat the LOHC reactor for generation of sufficient hydrogen to be provided for producing electricity in a fuel cell. There exist several approaches to this extent. A first approach is direct electric heating of a catalytic element comprising a catalytically active layer on top of a heater element or conductor material (US2011265738A, US2011268651A). In certain designs, the electric power required is extracted from the fuel cell (US2015056526A), or the electricity from the fuel cell is used to heat up a heat transfer medium, which is connected to the LOHC reactor via a heat exchanger (CN108940150A). Another approach is to install burners to generate heat by burning $H_2$ directly (KR20210120577A), or by burning additives, such as biofuel, fossil fuel, methanol, (bio-) ethanol, contained in the LOHC fluid (DE102014006430A1). Yet another approach is the use of heat pumps (CN112768724A).

The reaction temperature for the dehydrogenation can be decreased by using homogeneous catalysts, but generally, they require an additive for their activation in hydrogenation or dehydrogenation reactions. These additives are typically inorganic or organic compounds, either to activate the organic reactants or to activate the catalyst itself. For example: $K_3PO_4$ and ZnO for Ru-MACHO-BH catalyzed $CO_2$ hydrogenation to methanol (Bai, Sels et al ACS Catal. 2021, 11, 12682), KOH for aqueous-phase Ru-MACHO catalyzed methanol dehydrogenation to $H_2$ and $CO_2$ (Beller et al Nature 2013, 495, 85), $K_2CO_3$ for Ru-MACHO-BH catalyzed lactonization of 1,2-diols (Beller et al Chem. Commun. 2015, 51, 13082), $KHCO_3$ for Ir-complexes (Himeda et al Inorg. Chem. 2015, 54, 5114), DBU for $CO_2$ hydrogenation to formic acid with Ru-NNN Pincer-type catalyst (Szymczak et al Chem. Commun. 2018, 54, 7790), $LiBF_4$ for Fe-PNP catalyzed formic acid dehydrogenation to $H_2$ and $CO_2$ (Hazari, Schneider et al J. Am. Chem. Soc. 2014, 136, 10234), $H_2SO_4$ for formic acid hydrogenation to methanol (Laurenczy, Himeda et al ACS Catal. 2017, 7, 1123, and $PPh_3$ for the dehydrogenation of 2-methylindoline catalyzed by mixed ligand Ir complexes dissolved in the ionic liquid tetraphenylphosphonium bis(trifluoromethylsulfonyl)-imide, $[PPh_4][NTf_2]$ (Søgaard, A. et al. Chem. Commun. 2019, 55 (14),

2046-2049. https://doi.org/10.1039/C8CC09883B). Those catalysts that function without the use of an additive are typically highly sensitive, in particular in the presence of oxygen or water, or both oxygen and water, and impractical to operate. Hence, additives are usually needed to promote the catalytic activity and to prevent catalyst inhibition.

A special type of catalyst, used for the hydrogenation and dehydrogenation of LOHCs, has been described in WO2012112758A2 or WO20200141520A1. Here, so called "Pincer"-type ligand complexes are used as catalyst in above described reactions in e.g. an acetonitrile/water mixture.

A "Pincer ligand" is a type of a chelating agent that can bind tightly to three adjacent coplanar sites, usually on a transition metal (scheme 3).

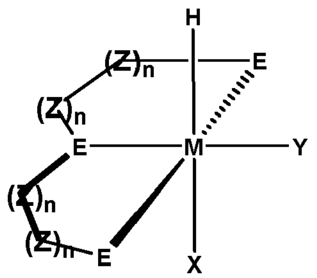

**M-pincer complex**

**E = P, N, O, C, As, S, Ge ...**

**Z = $CH_2$, Ar, NH, O, ...**

**n = 0,1,2,3, ...**

**M = Ru, Mn, Fe, Ir, ...**

**X = F, Cl, Br, I, H, $HBH_3$, OR, ...**

**Y = CO, $PR_3$, $AsR_3$, NO, NHC, NCR, H, Cl, ...**

*Scheme 3: Typical Pincer type catalysts*

Original Pincer-type ligands have the general tridentate form $D^1CD^2$ , wherein C is a carbon atom that can potentially interact with a metal, and $D^1$ and $D^2$ are groups containing coordinating atoms, also referred to as electron donating atoms. The donor atoms are typically N, C, P, S, O, As, S, Ge, and the linkers (Z) are oxygen atoms, or organic moieties, for example, $CH_2$, ethylene, propylene, aromatics (Ar) such as phenylene, -PhNH-, -PhO- or oxygen atoms.

In many Pincer ligands, the carbon atom forms a part of an aryl ring, typically phenyl. The carbon atom can be replaced by other coordinating atoms such as nitrogen or sulfur, which typically form a part of a heterocyclic ring such as a heteroaryl. A wide variety of tridentate Pincer type ligand catalysts, and syntheses for making such catalysts, are known (see e.g. Crabtree, Organometallics, 2011, 30 (1), pp 17-19; Gnanamgari and Crabtree, Organometallics, 2009, 28 (3), pp 922-924). Also supported Pincer-type catalysts have been used in hydrogenation reaction already, even in an ionic liquid as a solvent - so-called SILP-catalysts (J. Brünig et al. ACS Catal. 2018, 8, 2, 1048 - 1051). Known examples of Pincer complexes as homogeneous catalysts for hydrogenation and dehydrogenation are the "Ru-MACHO" ruthenium-based amino-type family (WO 2011048727; WO2013079659), Milstein ruthenium-based as well as iron-based pyridine-type Pincer complexes (Milstein et al ACS Catal. 2015, 5, 2416; Milstein et al Science 2007, 317, 790; Milstein et al Acc. Chem. Res. 2015, 48, 1979), and Goldman/Jones iridium-based phenyl-type Pincer complex (Goldman, Jones et al J. Am. Chem. Soc. 2017, 139, 8977).

The hydrogenation and dehydrogenation reactions typically take place in a solution with a volatile organic solvent, sometimes toxic, and therefore purification of the hydrogen product gas is needed to remove residual solvent before its further processing, e.g. contacting it with the anode of a fuel cell.

Therefore, it is an object of the present invention to further lower the temperature needed for the dehydrogenation process of LOHC based catalytic systems in order to make the whole process more energy efficient. Moreover, the catalytic system applied here should be stable and robust in use, and should provide for a less complex mode of performing hydrogenation and dehydrogenation using LOHCs in connection with fuel cells, in particular PEMs, for producing electricity.

The objectives mentioned above are reached by a catalytic system comprising the features depicted in present claim 1. Dependent claims 2 - 9 are directed to preferred aspects of the catalytic system of claim 1. Claim 10 is pointing at an inventive apparatus comprising the catalytic system of one of claims 1 - 9. Claim 11 protects a use of the catalytic system according to claims 1 - 9.

In that a catalytic system for hydrogenation and dehydrogenation of a liquid organic hydrogen carrier comprises a complex comprising a tridentate ligand of the general formula $D^1$ - E - $D^2$ and a transition metal, wherein E is covalently bonded to $D^1$ and $D^2$, and is complexing the transition metal, and $D^1$ comprises a donor center E' for complexing the transition metal, and $D^2$ comprises a donor center E" for complexing the transition metal, and E, E' and E" is an element

selected from the group consisting of P, N, O, C, As, S, Ge, Se, Si, B, Al, Sb, and wherein the catalytic system comprises an ionic liquid and a LOHC compound, a solution is given to the above-mentioned obstacles in using LOHCs as a versatile hydrogen storage. The transfer of the hydrogenation and dehydrogenation reactions of a LOHC into an ionic liquid environment plus using a tridentate Pincer-type catalyst for this reaction enables the skilled person to perform the envisaged liberation and storing of hydrogen at much lower temperatures, thus serving for a technical applicable solution for mobile vehicles equipped with a fuel cell for producing electricity. This was not made evident from the prior art.

In order for the inventive catalytic system to be used as a hydrogen storage and release system three ingredients are deemed necessary:

1. a LOHC compound;
2. a Pincer-type catalyst;
3. an ionic liquid.

In terms of liquid organic hydrogen carriers the skilled person knows what LOHC compounds work best for the intended purpose, i.e. to establish a catalytic system allowing a preferably continuously cyclic hydrogenation and dehydrogenation of the LOHC under technically reasonable conditions, in particular conditions which are present in vehicles comprising a fuel cell (working conditions).

LOHCs which can be used in present catalytic system have already been disclosed in the prior art (see prior art discussion). Preferably, as already mentioned the LOHCs used for the present purpose should be able to undergo reversible hydrogenation and dehydrogenation within the appropriate temperature and pressure range. Hence, it would be favorable if the LOHC chosen could be reversibly hydrogenated and dehydrogenated under test conditions (defined as in examples 3 and 4 for the system $CO_2$/formic acid).

In this regard, compounds which could theoretically be hydrogenated and dehydrogenated in the catalytic system of the invention but which would provide for too much side reactions during these cycles, or which are not manageable in the catalytic system for other reasons like low fluidity, are not encompassed by the definition of LOHC according to this invention. In particular, the instability (side reaction or decomposition under working conditions) either thermally or chemically e.g. by reaction with $H_2O$, $O_2$, the Pincer-type catalyst, and/or the ionic liquid is contemplated here. According to the invention it is envisaged that in a continuously cyclic hydrogenation and dehydrogenation advantageous LOHCs can run through 5000 cycles under test conditions but remain the storing/releasing capacity of $H_2$ to at least 50%, more preferably at least 70% and most preferably at least 90% compared to a fresh catalytic system under same conditions.

Preferably, e.g. aldehydes are excluded from the definition of LOHC compounds according to this invention, in particular aldehydes which might easily react with themselves or the Pincer-type catalyst and are thus not feasible for use in a continuously cyclic hydrogenation/dehydrogenation as needed for present purpose.

In addition, the LOHCs in question should be soluble in the ionic liquid used under working conditions. Advantageously at a temperature of 100°C the LOHC compound should have a solubility of at least 10 g/L, more preferably at least 50 g/L and most preferably at least 200 g/L in the ionic liquid used, e.g. 1-ethyl-3-methylimidazolium acetate.

Furthermore, the hydrogenation/dehydrogenation efficiency of the LOHC system used should be high enough for practical purposes. Preferably, the LOHC in question should have a minimal hydrogen storage and release capacity of at least 3 wt-%, more preferably at least 4 wt-% and most preferably at least 5 wt-% under test conditions. The wt-% refers to hydrogen and the LOHC only.

In a preferred aspect, the LOHC taken for the inventive catalytic system comprises a hydrocarbon aromatic compound. A liquid organic hydrogen carrier also refers to the partially or completely dehydrogenated form. A partially hydrogenated compound still can have a reasonable $H_2$ capacity. It is essentially the same thing in this context, but the compound may be chemically not an "aromatic" compound anymore. Hence, when talking about hydrocarbon aromatic compounds as LOHCs in this context also the reaction products of a hydrogenation of said aromatic compound is encompassed. The phrase "hydrocarbon aromatic compound" determines the fact that at least one part of the compound comprises an aromatic system composed of hydrocarbons. Preferred compounds in this regard are those mentioned in the prior art section. Extremely preferred are those selected from the group consisting of toluene, of benzyl toluenes, diaryl methylenes such as dibenzyl toluene

In a further preferred aspect, the liquid organic hydrogen carrier comprises a heteroaromatic compound. A partially hydrogenated heteroaromatic compound still can have a reasonable $H_2$ capacity. It will be essentially the same thing in this context, but the compound may be chemically not an "aromatic" compound any more. Hence, when talking about heteroaromatic compounds as LOHCs in this context also the reaction products of a hydrogenation of said heteroaromatic compound is encompassed. The phrase "heteroaromatic compound" determines the fact that at least one part of the compound comprises a heteroaromatic system composed of hydrocarbons and at least one heteroatom, like N, O, S.

In a still further preferred aspect, compounds for hydrogen storage in organic molecules that allow for reversible

dehydrogenation and hydrogenation in instant catalytic system are ketones, esters, carboxylic acids, $CO_2$. In particular preferred are C3 - C10 ketones, like acetone, butanone, or acetophenone, C1 - C10 esters like formates, acetates, or propionates where the ester substituent is an organyl like an alkyl or aryl such as methyl, ethyl, propyl, benzyl, phenyl or naphthyl, C1 - C10 carboxylic acids like formic acid, acetic acid, or benzoic acid.

More preferred are the LOHC systems like dibenzyl toluene (DBT)/H18-DBT, toluene/methylcyclohexane, pyridine/piperidine, N-ethylcarbazole (NEC)/H12-NEC, $CO_2$/methanol, $CO_2$/formic acid, acetone/isopropanol. Most preferred according to the present inventions are LOHC compounds selected from the group consisting of $CO_2$/formic acid and acetone/isopropanol.

As a second ingredient in the inventive catalytic system a Pincer-type catalyst is present in the catalytic system. The catalyst should be sufficiently active in hydrogenation and dehydrogenation of LOHCs under the working conditions. E.g. sufficiently active is a Pincer-type catalyst if it can preferably hydrogenate acetone at ≤100°C and < 100 bar hydrogen pressure with a turnover frequency of more than 1000 $h^{-1}$, more preferably more than 10000 $h^{-1}$ and most preferably more than 100000 $h^{-1}$ in an ionic liquid such as tributylme-thylphosphoniumbis(trifluoromethanesulfonyl)imide. The dehydrogenation of isopropanol should preferably occur at ≤100°C and 0 bar hydrogen pressure with a turnover frequency of more than 50 $h^{-1}$, more preferably more than 250 $h^{-1}$ and most preferably more than 1000 $h^{-1}$ in an ionic liquid such as tributylmethylphosphoniumbis(trifluoromethanesulfonyl)imide.

As already laid down in the prior art discussion such complexes comprise a central transition metal atom surrounded by a Pincer ligand, alternatively a dimeric complex comprising one Pincer ligand per transition metal. Pincer ligands are tridentate chelating agents, characterized by three coplanar bonds to the central transition metal atom in meridional configuration. The atoms that bind directly to the central metal atom are donors, and a Pincer complex has therefore a central and two flanking donors; the donor atoms are connected together via linkers to build the ligands. The term "donor atoms" refers to the electron donor capacity of these atoms. As such, a Pincer ligand can be abbreviated by the formula:

$$D^1 - E - D^2$$

wherein E is covalently bound to $D^1$ and $D^2$, and is complexing the transition metal, and $D^1$ comprises a donor center E' for complexing the transition metal, and $D^2$ comprises a donor center E" for complexing the transition metal, and E, E' and E" is an element selected from the group consisting of P, N, O, C, As, S, Ge, Se, Si, B, Al, Sb. The donor atoms E, E' and E" are preferably linked to each other by oxygen atoms, or organic moieties, for example, $CH_2$, ethylene, propylene, aromatics (Ar) such as phenylene, -PhNH-, -PhO-, and are preferably part of a cyclic hydrocarbon backbone, often established through aromatic or at least unsaturated cyclic or heterocyclic moieties. Preferably, the transition metal and the ligands form 5 and/or 6-ring structures when complexed.

The Pincer-type catalysts used according to the present invention comprise transition metals in a complexed form. As already discussed in the introduction, these transition metals are complexed in a tridentate format by the Pincer ligand atoms denoted as E, E' and E". In a preferred aspect, the transition metal is selected from the group consisting of Ru, Mn, Fe, Ir, Os, Mo, Rh, Pd, Pt, Ni, Cu, Co, W. More preferable, the transition metal is selected from the group consisting of Ru, Ir, Fe, Mn. Utmost preferred is the transition metal Ru in this connection.

Known advantageous examples of Pincer complexes as homogeneous catalysts for hydrogenation and dehydrogenation are the "Ru-MACHO" ruthenium-based amino-type family (WO 2011048727; WO2013079659), Milstein ruthenium-based as well as iron-based pyridine-type Pincer complexes (Milstein et al ACS Catal. 2015, 5, 2416; Milstein et al Science 2007, 317, 790; Milstein et al Acc. Chem. Res. 2015, 48, 1979), Goldman/Jones iridium-based phenyl-type Pincer complex (Goldman, Jones et al J. Am. Chem. Soc. 2017, 139, 8977), osmium-based amino-type Pincer complexes (Gusev et al Angew. Chem. Int. Ed. 2012, 51, 2772), iron-based amino-type Pincer complexes (Beller et al Angew. Chem. Int. Ed. 2013, 52, 14162), manganese-based pyridine-type Pincer complexes (Kirchner, Gonsalvi et al Chem. Sci. 2017, 8, 5024), manganese-based amino-type Pincer complexes (Beller et al Angew. Chem. Int. Ed. 2016, 55, 15364).

As already indicated, an advantage of homogeneous catalysts, as compared to heterogeneous catalysts, is that the reaction temperature for hydrogenation and dehydrogenation can be decreased to an extent more favorable for the working conditions applied. However, homogeneous catalysts generally require an additive for their activation in the hydrogenation or dehydrogenation reactions. These additives are typically inorganic or organic compounds, either to activate the organic reactants or to activate the catalyst itself, to promote the catalytic activity, and to prevent catalyst inhibition and deactivation. It is one major advantage connected with the inventive catalytic system that no such additive is necessary to be activate enough under the working conditions. Hence, preferably no additional inorganic or organic compound, in particular a basic compound, is present in the catalytic system of the invention.

As already mentioned, E, E' and E' are atoms which coordinate with the transition metal in order to establish the Pincer type catalyst. In a preferred mode E, E' and E" are selected from the group consisting of P, N, O, and C. In a more preferred aspect E is selected from the group consisting of C, N, and O, while E' is selected from P, S, C, and

N and E" is selected from P, S, C, and N. It is extremely preferred if the tridentate ligand of the general formular $D^1$ - E - $D^2$, wherein E is covalently bound to $D^1$ and $D^2$, and is complexing the transition metal, and $D^1$ comprises a donor center E' for complexing the transition metal, and $D^2$ comprises a donor center E" for complexing the transition metal, comprises the following sequence of complexing centers for E'EE" in its structure: PNP, NCN, NNN, PCP, POP, SNS, SNP, CNC. Typical examples of preferred Pincer-type catalysts of this nature include carbonylchlorohy-drido[bis(2-di-i-propylphosphinoethyl)amine]ruthenium(II), carbonylchloro-hydrido[bis(2-(diphenylphosphinoethyl)amino]ruthenium(II), carbonylhy-drido(tetrahydroborato)[bis(2-diphenylphosphinoethyl)amino]ruthenium(II), and carbonyldihydrido[bis(2-di-i-propylphosphinoethyl)amine]ruthenium(II).

The hydrogenation and dehydrogenation reactions take place in an ionic liquid as a third component to the catalytic system. An ionic liquid is a salt in the liquid state. Preferably, the term is restricted to salts whose melting point is below 200°C, and more preferably below 100°C, and most preferably below 20°C. It should at least be liquid under working conditions. While ordinary liquids such as water and gasoline comprise molecular compounds, ionic liquids are essentially made of ions. These substances are variously called liquid electrolytes, ionic melts, ionic fluids, fused salts, liquid salts, or ionic glasses. The ionic liquid preferably is in a non-aqueous form. This means that the water content of the ionic liquid is below 10 wt-%, preferably below 1 wt-% and most preferably below 0.1 wt-% of water content based on the weight of the ionic liquid used.

The ionic bond is usually stronger than the Van der Waals forces between the molecules of ordinary liquids. Because of these strong interactions, salts tend to have high lattice energies, manifested in high melting points. Some salts, especially those with organic cations, have lower lattice energies and thus are liquid at or below room temperature. Examples include compounds based on the 1-ethyl-3-methylimidazolium (EMIM) cation and include: EMIM:Cl, EMIMAc (acetate anion), EMIM dicyanamide, $(C_2H_5)(CH_3)C_3H_3N_2^+ \cdot N(CN)_2^-$, that melts at -21°C, and 1-butyl-3,5-dimethylpyridinium bromide which becomes a glass below -24°C. The skilled person knows what ionic liquids can be used in this connection.

Ionic liquids are known as solvents for homogeneous catalysis. According to this invention an ionic liquid is a preferably non-aqueous ionic compound (salt) with a liquid state in the complete temperature range of the working conditions of the catalytic system. Due to the ionic character, ionic liquids have an extremely low vapor pressure, which means that they, in all practical applications, do not evaporate. Consequently, when ionic liquids are used as a solvent for homogeneous catalysis, the vapor phase in such a system is solvent-free, unlike other types of solvents, such as ethanol, cyclohexane, water, acetone, ether. This is extremely advantageous in the present case of dehydrogenating LOHCs in an ionic liquid. The hydrogen formed is free of any residual ionic liquid solvent and does not need to be purified further but can be applied directly to further processing, e.g. to the fuel cell anode.

The melting point of the ionic compound depends on the type of cation and anion in the compound. Some preferable examples of cations in ionic liquids are (imid)azolium, ammonium, phosphonium, pyrrolidinium, piperidinium, sulfonium, pyridinium. Some preferable examples of anions in ionic liquids are carboxylates, halides, phosphates, bis(trifluoromethanesulfonyl)imide), triflate, sulfates, borates, nitrates (scheme 4).

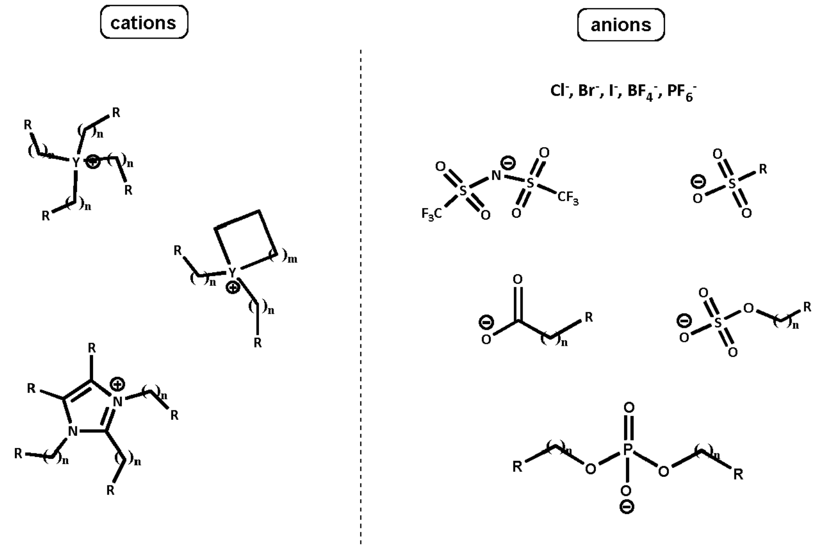


Y = P, N
R = $CH_3$, OH, OR, $NR_3$, H, $CF_3$
n = 0-20
m=0-6

*Scheme 4: Examples of cations and anions in preferred ionic liquids*

In a preferred aspect the cation of the ionic liquid used in the present invention is selected from the group consisting (imid)azolium, phosphonium, pyrrolidinium, piperidinium. In a preferred aspect the anion of the ionic liquid used in the present invention is selected from the group consisting carboxylates, phosphates, bis(trifluoromethanesulfonyl)imide), triflate. In a more preferred form the ionic liquid is selected from the group consisting of cations being tributylmethylphosphonium, 1-butyl-2,3-dimethylimidazolium, 1-butyl-1-methylpyrrolidinium, 1-butyl-1-methylpiperidinium, 1-ethyl-3-methylimidazolium, 1-butyl-3-methylimidazolium and anions being bis(trifluoromethanesulfonyl)imide, triflate, acetate, formate, diethylphosphate. The most preferred combinations of cations and anions are tributylmethylphosphonium bis(trifluoromethanesulfonyl)imide, 1-butyl-2,3-dime-thylimidazolium bis(trifluoromethanesulfonyl)imide, 1-butyl-1-methylpyrroli-dinium triflate, or 1-butyl-1-methylpiperidinium bis(trifluoromethanesulfonyl)imide, 1-ethyl-3-methylimidazolium acetate, 1-ethyl-3-methylimidazolium formate, 1-ethyl-3-methylimidazolium di-ethylphosphate, 1-butyl-3-methylimidazolium acetate.

As already indicated, the catalytic system claimed can be either a completely homogenous liquid solution or can be a heterogenous mixture comprising the components of the catalytic system. When talking about a homogeneous liquid solution it is envisaged that the solution is a liquid fluid under the operating conditions necessary for the intended purpose, i.e. to establish a catalytic system allowing a continuously cyclic hydrogenation and dehydrogenation of the LOHC under technically reasonable conditions, e.g. working conditions, in particular conditions which are present in fuel cell driven vehicles.

In this sense the components of the catalytic system are mixed together in a respective compartment, heated to a preferred temperature and thereby dehydrogenated. As compartment gas tight tanks, beakers, vessels etc. can be used having a fluid connection to a device for $H_2$-consumption or storage. Although a certain hydrogen pressure can be present, for the dehydrogenation preferably no excess $H_2$-pressure needs to be applied. The temperature for this reaction varies advantageously between -40°C - 300°C, more preferably between 25°C - 150°C, and most preferably between 80°C - 120°C. The hydrogenation happens under a certain $H_2$-pressure, preferably in a kind of autoclave at 0.01 - 200 bar, more preferred 0.1 - 100 bar and most preferred 1 - 60 bar. The temperatures for hydrogenation varies between -40°C - 300°C, more preferably 25°C - 150°C and most preferably 80°C - 120°C. The above mentioned conditions of temperature and hydrogen pressure are termed working conditions according to this invention.

The catalytic system of the invention can also work in a kind of heterogenous mixture, meaning that some or all components of the catalytic system possess a different state of matter under working conditions. E.g., the ionic liquid used can still be in liquid form. The Pincer-type catalyst e.g. can be bound to a solid material, or supported on one or more porous oxidic materials. Further, the LOHC can be in liquid state but also can form a product gas, apart from hydrogen, such as $CO_2$ (dehydrogenated form of the LOHC formic acid).

In one example, ionic liquids can be combined with solid materials, leading to heterogeneous supported ionic liquid systems as the inventive catalytic system, in which the Pincer-type catalyst is dissolved in the ionic liquid that

resides in the pores of the solid material. Such systems are known as SILP (Supported Ionic Liquid Phase) materials. The supports in SILP materials are similar to, or the same, materials as typically used as support materials for heterogeneous catalysts, such as organic polymers (examples can be polystyrene-, divinylbenzene-, PEG-based polymers), alumina, titania, silica, carbon, MgO, ceria, zirconia, or mixed oxides, such as MgAl spinel, ZrCe oxides. If the ionic liquid is used as a solvent for a homogenous catalyst, then the corresponding SILP material becomes easily separable from the rest, alike a heterogeneous catalyst, while maintaining the advantages of the homogeneous catalyst system, e.g. stability, robustness, simplicity (no additives needed), selectivity and low-temperature activity. The working conditions (temperature, hydrogen pressure) are overall the same as for the homogeneous liquid solution. The SILP catalysts are typically used for continuous-flow gas-phase reactions with the catalyst-containing SILP residing in a fixed bed reactor.

One preferable approach to generate the SILP heterogeneous system is obtained by combining the Pincer-type catalyst, the ionic liquid and the support material in a suitable solvent that is later removed under vacuum. This is typically referred to as wet impregnation. Typically, the support materials are mesoporous (meaning with pores in the range 2-50 nm), the ionic liquids achieves 1-30%, preferably 5-20% volumetric pore filling. (Supported Ionic Liquids: Fundamentals and Applications, 1st Ed., R. Fehrmann, A. Riisager, M. Haumann (Eds.), Wiley-CH, 2014.); Werner, S. et al., Chem. Eng. Technol. 2012, 35, 1962-1967; Selvam, T., Applied Catalysis A: General 445-446 (2012) 92-101; 1).

The most preferred SILP catalytic system can be a combination of LOHC, Pincer-type catalyst, and ionic liquids as follows:

LOHC can be isopropanol;
Pincer-type catalyst can be carbonylhydrido(tetrahydroborato)[bis(2-diphe-nylphosphinoethyl)amino]ruthenium(II) or carbonyldihydrido[bis(2-di-i-propylphosphinoethyl)amine]ruthenium(II);
ionic liquid can be tributylmethylphosphonium bis(trifluoromethanesulfonyl)imide, 1-butyl-2,3-dimethylimidazolium bis(trifluoromethanesulfonyl)imide, 1-butyl-1-methylpyrrolidinium triflate, or 1-butyl-1-methylpiper-idinium bis(trifluoromethanesulfonyl)imide;
support can be mesoporous silica.

In a very preferred aspect, the catalytic system is present in a single compartment either as a homogenous or heterogenous mixture and the process of hydrogenation and dehydrogenation is performed only in this one compartment in a continuously cyclic manner. Continuously cyclic means that the hydrogenation and dehydrogenation of the LOHC in the catalytic system is performed several times in a row (more than 100, preferably more than 1000 and most preferably more than 10000 times) by adapting the temperature and $H_2$-pressure necessary to perform the hydrogenation and dehydrogenation reactions within the working condition window.

In a second embodiment, the present invention is directed to an apparatus for producing electricity comprising a fuel cell and an inventive catalytic system. Such an apparatus for producing electricity preferably further comprise a reactor containing the inventive catalytic system and preferably a system for heating the reactor, and optionally a system for separation of the hydrogen from the LOHC, and optionally one or more heat exchangers. In one aspect, the system for heating the reactor comprises a burner to burn hydrogen. (Niermann, M. et al., Energy Environ. Sci. 2019, 12 (1), 290-307; https://doi.org/10.1039/C8EE02700E). In another aspect, the system for heating the reactor comprises one or more electrically heated bodies, such as plates or meshes, connected to an external electric power source, such as a battery or a generator. In a further aspect, the electrically heated bodies are connected to the fuel cell and the fuel cell provides the electric power to the heating system.

The preferred aspects of the catalytic system according to the invention are applicable to the apparatus mutatis mutandis. In a very preferred mode the catalytic system of the invention functions in a one pot compartment in a continuously cyclic hydrogenation and dehydrogenation reaction.

In a third embodiment of the present invention, a use for the catalytic system is claimed. The catalytic system of the invention is used for providing hydrogen to a fuel cell for producing electricity. Preferably, the hydrogen is supplied in a purified form, e.g. as needed for application with a PEM fuel cell. The preferred aspects of the catalytic system and the apparatus apply mutatis mutandis also for the inventive use.

An LOHC catalytic system for the release of hydrogen for a fuel contains (1) a tank containing the hydrogen rich LOHC liquid, (2) a second tank containing the dehydrogenated LOHC liquid, (3) a dehydrogenation reactor, (4) a facility for heating the reactor, such as a hydrogen burner, oil heater, electrical heating (5) a facility to purify the hydrogen product gas, which typically includes a cooler or heat exchanger to cool the product, and a gas-oil separation unit. The purified hydrogen gas is then fed into the fuel cell to generate electrical power (Niermann, M. et al. Energy Environ. Sci. 2019, 12 (1), 290-307; https://doi.org/10.1039/C8EE02700E; Preuster, P. et al., J. Hydrog. Ener. 2018, 43(3), 1758-1768).

The present invention relates to the hydrogen storage and release in organic liquids. The complete cycle using LOHC consists of (1) the hydrogenation of the dehydrogenated form of the LOHC system, using hydrogen gas and (2) a dehydrogenation of the hydrogenated form of the LOHC in the catalytic system. The hydrogen is thus stored as the hydrogenated form of the LOHC. The hydrogenated form of the LOHC has a higher energy density per volume than

compressed or liquefied hydrogen, is easier to transport or store, and is safer to handle, due to the lower flammability of the organic liquids. Furthermore, the catalytic system mentioned here provides for a lower hydrogenation/dehydrogenation temperature and is due to the possible avoidance of additives less complex compared to systems proposed in the prior art.

EXAMPLES:

Dehydrogenation under batch conditions:

Example 1:

For dehydrogenation of isopropanol in a batch reactor, 0.013 mmol of a car-bonylhydrido(tetrahydroborato)[bis(2-diphenylphosphinoethyl)amino]ruthenium(II) Pincer-type catalyst is dissolved in 1 mL of the ionic liquid 1-butyl-1-methylpiperidinium bis(trifluoromethanesulfonyl)imide and heated to 100°C under stirring (typically 700 rpm) in a two-necked round-bottomed flask. Then, 2 ml of isopropanol is added to the mixture. After 2 hours of reaction, the conversion of isopropanol was 9%, corresponding to a turnover number of 380 and a turnover frequency of 190 $h^{-1}$. Isopropanol conversion is determined by $^1H$ and $^{13}C$ NMR. $H_2$ is detected using gas chromatography.

Example 2:

0.003 mmol of a carbonylhydrido(tetrahydroborato)[bis(2-diphenylphosphinoethyl)amino]ruthenium(II) Pincer-type catalyst is added to 3 mL of the ionic liquid 1-butyl-3-methylimidazolium acetate and heated to 95°C and stirred (typically 700 rpm) in a two-necked round-bottomed flask. 2 mL of formic acid is added. After 18 h of reaction full conversion is obtained, corresponding to a turnover number of 16750 and a turnover frequency of 930 $h^{-1}$. Formic acid conversion is determined by $^1H$ and $^{13}C$ NMR. $H_2$ is detected using gas chromatography.

Example 3:

Hydrogenation in a high-pressure reactor.
A solution containing 0.002 mmol of the carbonyldihydrido[bis(2-di-i-propylphosphinoethyl)amine]ruthenium(II) Pincer-type catalyst and 15 mL of the ionic liquid 1-ethyl-3-methylimidazolium acetate is heated to 80°C and stirred (typically 700 rpm) in an autoclave. Then, the autoclave is loaded with a feed gas containing 30 bar hydrogen and 30 bar $CO_2$. Formic acid production is determined by $^1H$ and $^{13}C$ NMR. The maximum turnover number obtained was 32411 and a turnover frequency of 900 $h^{-1}$ after two loads of 30:30 bar $CO_2/H_2$ and a total of 36 hours.

Example 4:

Hydrogenation - dehydrogenation cycle:
The formic acid obtained in solution as described in Example 3, is reversibly converted to $H_2$ and $CO_2$. After the hydrogenation step, the residual gas is released and the autoclave is heated until the dehydrogenation temperature (80°C) under stirring (typically 700 rpm). During the dehydrogenation step, the autoclave is left open under stirring to allow the release of $H_2$ and $CO_2$. Formic acid production and consumption is determined by $^1H$ and $^{13}C$ NMR. No visible deactivation of the system was observed in four different experiments of 10-13 cycles each. The system performs at least 13 cycles of hydrogenation/dehydrogenation with a maximum TON of 51000 using 3 mL of the ionic liquid 1-ethyl-3-methylimidazolium acetate and 0.002 mmol of the carbonyldihydrido[bis(2-di-i-propylphosphinoethyl)amine]ruthenium(II) Pincer-type catalyst.

Example 5:

Dehydrogenation under continuous-flow conditions:
0.02 mmol of the carbonylhydrido(tetrahydroborato)[bis(2-diphenylphosphinoethyl)amino]ruthenium(II) Pincer-type catalyst is dissolved in 4 mL of the ionic liquid 1-butyl-3-methylimidazolium acetate and heated to 80-95°C and stirred (typically 700 rpm) in a three-necked round-bottomed flask. Then, formic acid is added by means of a syringe pump at a rate of 2-10 mL/h. The system consumed 15 liters of formic acid, reflected in a TON of 18000000 with an average TOF of 8000 $h^{-1}$ at 95°C after 112 days.

Example 6:

SILP system for dehydrogenation in a fixed bed reactor:
A typical 1 wt% Ru/$SiO_2$ SILP catalyst is prepared by dissolving 0.3 mol of the carbonylhydrido(tetrahydroborato)[bis(2-diphenylphosphinoethyl)-amino]ruthenium(II) Pincer-type catalyst and 0.4 mL of the ionic liquid tributylmethylphosphonium bis(trifluoromethanesulfonyl)imide in 15 mL of dichloromethane. Then, 4 g of the solid support $SiO_2$ is added and stirred (typically 300 rpm) for 15 minutes before removing the solvent under reduced pressure, resulting in the SILP catalyst. In a typical experiment, 4 g of the SILP catalyst is placed in the reactor tube (height 20 cm, diameter 2.5 cm, height of catalytic bed 2 cm) and the reactor heated to a temperature in the range 80-140°C under a flow of nitrogen gas at 1 bar. Isopropanol is then pumped to an evaporator at 30 g/h, and the vapor is admitted to the reactor. The SILP catalyst described above was active for at least 100 hours affording 3-5% isopropanol conversion (TOF up to 70 $h^{-1}$).

## Claims

1. Catalytic system for hydrogenation and dehydrogenation of a liquid organic hydrogen carrier comprising a complex comprising a tridentate ligand of the general formular $D^1$ - E - $D^2$ and a transition metal, wherein

   E is covalently bonded to $D^1$ and $D^2$, and is complexing the transition metal, and
   $D^1$ comprises a donor center E' for complexing the transition metal, and
   $D^2$ comprises a donor center E" for complexing the transition metal, and
   E, E' and E" is an element selected from the group consisting of P, N, O, C, As, S, Ge, Se, Si, B, Al, Sb,
   **characterized in that**,
   the catalytic system comprises an ionic liquid and a liquid organic hydrogen carrier compound.

2. Catalytic system according to claim 1, wherein the liquid organic hydrogen carrier comprises a hydrocarbon aromatic compound.

3. Catalytic system according to claim 1, wherein the liquid organic hydrogen carrier comprises a heteroaromatic compound.

4. Catalytic system according to claim 1,
   wherein the liquid organic hydrogen carrier comprises compounds from the group of ketones, esters, carboxylic acids, $CO_2$.

5. Catalytic system according to one of claims 1 - 4,
   wherein the transition metal is an element selected from the group consisting of Ru, Mn, Fe, Ir, Os, Mo, Rh, Pd, Pt, Ni, Cu, Co, W.

6. Catalytic system according to one of claims 1 - 5,
   wherein the tridentate ligand of the general formular $D^1$ - X - $D^2$ comprises the following complexing centers for E'EE" in its structure: PNP, NCN, NNN, PCP, POP, SNS, SNP, CNC.

7. Catalytic system according to one of claims 1 - 6,
   wherein the ionic liquid cation is selected from (imid)azolium, ammonium, phosphonium, pyrrolidinium, piperidinium, sulfonium, pyridinium and the ionic liquid anion is selected from the group consisting of are carboxylates, halides, phosphates, bis(trifluoromethanesulfonyl)imide, triflate, sulfates, borates, nitrates.

8. Catalytic system according to one of claims 1 -7,
   wherein the catalytic system is a homogeneous liquid solution.

9. Catalytic system according to one of claims 1 - 7,
   wherein the catalytic system is a heterogenous mixture.

10. Apparatus for producing electricity comprising a fuel cell and a catalytic system according to one of the preceding claims.

11. Use of a catalytic system of one of claims 1 - 9 for providing hydrogen to a fuel cell for producing electricity.

Europäisches Patentamt
European Patent Office
Office européen des brevets

# EUROPEAN SEARCH REPORT

Application Number
EP 22 17 5291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2022/098034 A1 (WERGHI BARAA [SA] ET AL) 31 March 2022 (2022-03-31)<br>* abstract *<br>* claims 1,5 *<br>* paragraphs [0149], [0162] *<br>* figure 3 *<br>----- | 1,4-11<br><br>2,3 | INV.<br>C01B3/22<br>B01J23/00 |
| Y | WO 2012/112758 A2 (UNIV YALE [US]; CRABTREE ROBERT [US]; LUCA OANA [US]) 23 August 2012 (2012-08-23)<br>* claims 1,2,14,15 *<br>----- | 2,3 | |
| A | US 2022/073344 A1 (MILSTEIN DAVID [IL] ET AL) 10 March 2022 (2022-03-10)<br>* claims 1-10 *<br>----- | 1-11 | |
| A | US 2017/283257 A1 (MILSTEIN DAVID [IL] ET AL) 5 October 2017 (2017-10-05)<br>* abstract *<br>* paragraphs [0043], [0215], [0216], [0255] *<br>----- | 1-11 | TECHNICAL FIELDS SEARCHED (IPC) |
| A | ASHISH KUMAR SINGH ET AL: "Hydrogen energy future with formic acid: a renewable chemical hydrogen storage system",<br>CATALYSIS SCIENCE & TECHNOLOGY,<br>vol. 6, no. 1, 1 January 2016 (2016-01-01), pages 12-40, XP055350858,<br>UK<br>ISSN: 2044-4753, DOI: 10.1039/C5CY01276G<br>* abstract *<br>* figure 1 *<br>----- | 1-11 | C01B<br>B01J |

The present search report has been drawn up for all claims

| Place of search | Date of completion of the search | Examiner |
|---|---|---|
| Munich | 8 November 2022 | Alvarez Rodriguez, C |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 17 5291

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2022

| Patent document cited in search report | Publication date | Patent family member(s) | Publication date |
|---|---|---|---|
| US 2022098034 A1 | 31-03-2022 | US 2022098034 A1 | 31-03-2022 |
| | | WO 2020128668 A1 | 25-06-2020 |
| WO 2012112758 A2 | 23-08-2012 | NONE | |
| US 2022073344 A1 | 10-03-2022 | CN 113195403 A | 30-07-2021 |
| | | EP 3906213 A1 | 10-11-2021 |
| | | IL 264043 A | 30-06-2020 |
| | | JP 2022513283 A | 07-02-2022 |
| | | KR 20210099637 A | 12-08-2021 |
| | | US 2022073344 A1 | 10-03-2022 |
| | | WO 2020141520 A1 | 09-07-2020 |
| US 2017283257 A1 | 05-10-2017 | AU 2015310503 A1 | 06-04-2017 |
| | | CA 2959873 A1 | 10-03-2016 |
| | | CN 107001032 A | 01-08-2017 |
| | | EP 3189006 A1 | 12-07-2017 |
| | | JP 2017528409 A | 28-09-2017 |
| | | KR 20170052618 A | 12-05-2017 |
| | | US 2017283257 A1 | 05-10-2017 |
| | | WO 2016035081 A1 | 10-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020120261 A1
- WO 2020064222 A1
- WO 2018228895 A1
- DE 102017201451 A1
- US 2016061383 AA
- DE 102012004444 A1
- US 20100081034 A
- US 2011265738 A
- US 2011268651 A
- US 2015056526 A
- CN 108940150 A
- KR 20210120577 A
- DE 102014006430 A1
- CN 112768724 A
- WO 2012112758 A2
- WO 20200141520 A1
- WO 2011048727 A
- WO 2013079659 A


### Non-patent literature cited in the description


- *Energy Environ. Sci.,* 2011, vol. 4, 2767
- **HUANG et al.** *J. Am. Chem. Soc,* 2009, vol. 131 (39), 13898-13899
- **FANG et al.** *J Am. Chem. Soc,* 2009, vol. 131 (42), 15330-15338
- **HEUBLEIN, N. et al.** *International Journal of Hydrogen Energy,* 2020, vol. 45 (46), 24902-24916, https://doi.org/10.1016/j.ijhydene.2020.04.274
- **KWAK et al.** *Energy Conversion and Management,* 2021, vol. 239, 114124, https://doi.org/10.1016/j.en-conman.2021.114124
- **XIE, Y. ; MILSTEIN, D.** *ACS Appl. Energy Mater.,* 2019, vol. 2 (6), 4302-4308, https://doi.org/10.1021/acsaem.9b00523
- **JORSCHICK, H. et al.** *Sustainable Energy Fuels,* 2021, vol. 5 (5), 1311-1346, https://doi.org/10.1039/D0SE01369B
- **BAI, SELS et al.** *ACS Catal.,* 2021, vol. 11, 12682
- **BELLER et al.** *Nature,* 2013, vol. 495, 85
- **BELLER et al.** *Chem. Commun.,* 2015, vol. 51, 13082
- **HIMEDA et al.** *Inorg. Chem.,* 2015, vol. 54, 5114
- **SZYMCZAK et al.** *Chem. Commun.,* 2018, vol. 54, 7790
- **HAZARI, SCHNEIDER et al.** *J. Am. Chem. Soc.,* 2014, vol. 136, 10234
- **LAURENCZY, HIMEDA et al.** *ACS Catal.,* 2017, vol. 7, 1123
- **SØGAARD, A. et al.** *Chem. Commun.,* 2019, vol. 55 (14), 2046-2049, https://doi.org/10.1039/C8CC09883B
- **CRABTREE.** *Organometallics,* 2011, vol. 30 (1), 17-19
- **GNANAMGARI ; CRABTREE.** *Organometallics,* 2009, vol. 28 (3), 922-924
- **J. BRÜNIG et al.** *ACS Catal.,* 2018, vol. 8 (2), 1048-1051
- **MILSTEIN et al.** *ACS Catal.,* 2015, vol. 5, 2416
- **MILSTEIN et al.** *Science,* 2007, vol. 317, 790
- **MILSTEIN et al.** *Acc. Chem. Res.,* 2015, vol. 48, 1979
- **GOLDMAN, JONES et al.** *J. Am. Chem. Soc.,* 2017, vol. 139, 8977
- **GUSEV et al.** *Angew. Chem. Int. Ed.,* 2012, vol. 51, 2772
- **BELLER et al.** *Angew. Chem. Int. Ed.,* 2013, vol. 52, 14162
- **KIRCHNER, GONSALVI et al.** *Chem. Sci.,* 2017, vol. 8, 5024
- **BELLER et al.** *Angew. Chem. Int. Ed.,* 2016, vol. 55, 15364
- Supported Ionic Liquids: Fundamentals and Applications. Wiley-CH, 2014
- **WERNER, S. et al.** *Chem. Eng. Technol.,* 2012, vol. 35, 1962-1967
- **SELVAM, T.** *Applied Catalysis A: General,* 2012, vol. 92-101 (1), 445-446
- **NIERMANN, M. et al.** *Energy Environ. Sci.,* 2019, vol. 12 (1), 290-307, https://doi.org/10.1039/C8EE02700E
- **PREUSTER, P. et al.** *J. Hydrog. Ener.,* 2018, vol. 43 (3), 1758-1768